# FASCICULE DE BREVET EUROPEEN

(11) **EP 1 623 879 B1**
(45) Date de publication et mention de la délivrance du brevet: **27.02.2008**
(21) Numéro de dépôt: 05291393.6
(22) Date de dépôt: 28.06.2005
(51) Int. Cl.: B60R 19/02

(54) **Ensemble de bloc-avant de véhicule automobile**
Kraftfahrzeugfrontendmodul
Front end module of motor vehicle

(30) Priorité: 02.08.2004 FR 0408531
(43) Date de publication de la demande: 08.02.2006
(73) Titulaire: Faurecia Bloc Avant, 92000 Nanterre (FR)
(72) Inventeur: Bierjon, Didier, 25400 Audincourt (FR); Mary, Raphaël, 85110 Schelldorf (DE)
(74) Mandataire: Lanceplaine, Jean-Claude

(56) Documents cités:
- EP-A- 1 232 932
- DE-B3- 10 237 454
- FR-A- 2 783 797
- FR-A- 2 821 813
- US-B1- 6 357 821

## Description

La présente invention concerne un ensemble de bloc-avant de véhicule automobile.

On connaît notamment dans le document EP-A-1 232 932, une structure de bloc-avant de véhicule automobile comprenant une face avant, qui présente une partie centrale et deux parties latérales, une peau de pare-chocs, deux poutres flexibles s'étendant latéralement et formant des supports de la peau de pare-chocs, dont chacune a une première extrémité reliée à la partie centrale de la face avant et une seconde extrémité destinée à être reliée à une partie avant d'aile de carrosserie du véhicule et deux blocs optiques, dont chacun est fixé rigidement à une poutre respective.

La structure décrite dans ce document permet un positionnement automatique et permanent des contours visibles des blocs optiques par rapport aux extrémités d'ailes correspondantes et à la peau de pare-chocs. Dans le même temps, cette structure assure un positionnement relatif précis des extrémités d'ailes et de la peau de pare-chocs.

Mais, cette disposition présente un inconvénient.

En effet, dans certaines configurations de la peau de pare-chocs, la zone centrale de cette peau de pare-chocs située entre les deux premières extrémités des poutres flexibles n'est pas soutenue si bien que lorsque l'avant du véhicule est soumis à une pression verticale, comme par exemple à la suite d'un choc avec un piéton ou lors d'un appui, cette zone centrale de la peau de pare-chocs peut subir un enfoncement.

On connaît également dans le document DE 102 37 454 B3 un ensemble de bloc-avant de véhicule automobile comprenant une face avant qui comporte un renfort horizontal sur lequel est en appui une zone centrale de la peau de pare-chocs.

Cette face avant ne permet pas d'obtenir la cohésion de l'ensemble des éléments la composant.

L'invention a donc pour but de proposer un ensemble de bloc-avant qui évite cet inconvénient et qui permet de rigidifier la peau de pare-chocs et d'augmenter la cohésion entre les différents éléments composant la structure de bloc-avant.

L'invention a donc pour objet un ensemble de bloc-avant de véhicule automobile, du type comprenant :
- une face avant rigide présentant une partie centrale et deux parties latérales,
- une peau de pare-chocs,
- deux poutres flexibles s'étendant latéralement dont une première extrémité est reliée à la partie centrale de la face avant et dont une seconde extrémité est reliée à une partie avant d'une aile de carrosserie, et
- deux blocs optiques, dont chacun est fixé rigidement à une poutre flexible respective,
caractérisée en ce que les deux premières extrémités des poutres flexibles sont reliées entres elles par un renfort horizontal sur lequel est en appui une zone centrale de la peau de pare-chocs.

Selon d'autres caractéristiques de l'invention :
- la peau de pare-chocs est fixée sur la première extrémité de chaque poutre flexible,
- le renfort comporte des moyens de positionnement de la zone centrale de la peau de pare-chocs,
- les moyens de positionnement sont formés par au moins une gouttière s'étendant transversalement suivant la direction générale du renfort et destinée à coopérer avec ladite zone centrale de la peau de pare-chocs, et
- le renfort est formé par un profilé métallique ou en matière plastique.

L'invention sera mieux comprise à la lecture de la description qui va suivre, donnée à titre d'exemple et faite en se référant aux dessins annexés, sur lesquels :
- la Fig. 1 est une vue schématique en perspective d'un ensemble de bloc-avant, conforme à l'invention,
- la Fig. 2 est une vue schématique en perspective éclatée des différents éléments composant l'ensemble de bloc-avant, conforme à l'invention,
- la Fig. 3 est une vue schématique en perspective de la face avant de l'ensemble de bloc-avant, conforme à l'invention, et
- la Fig. 4 est une vue schématique en perspective d'une poutre flexible de l'ensemble de bloc-avant, conforme à l'invention.

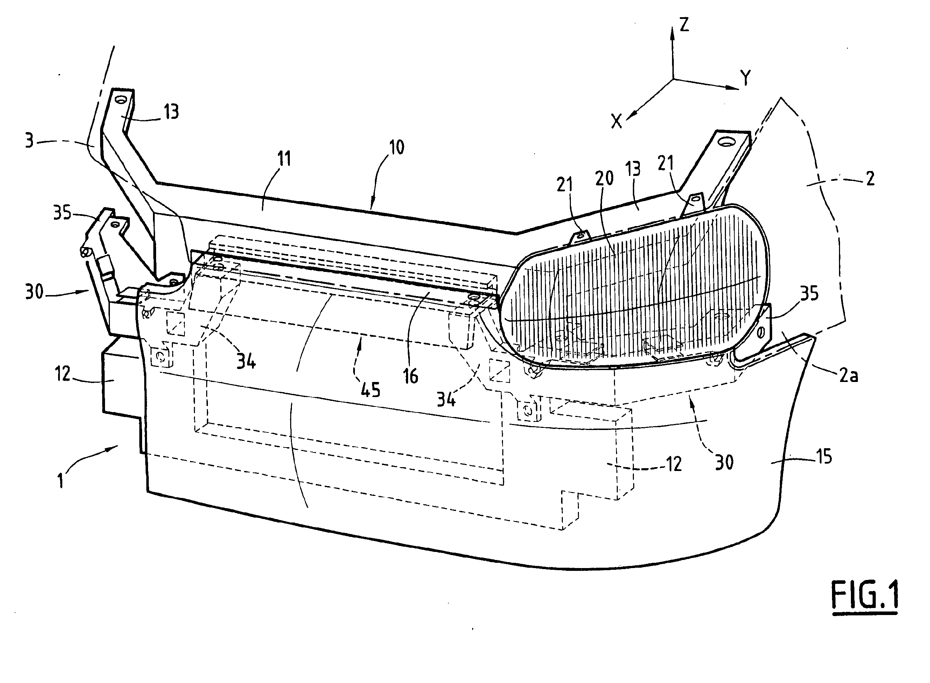

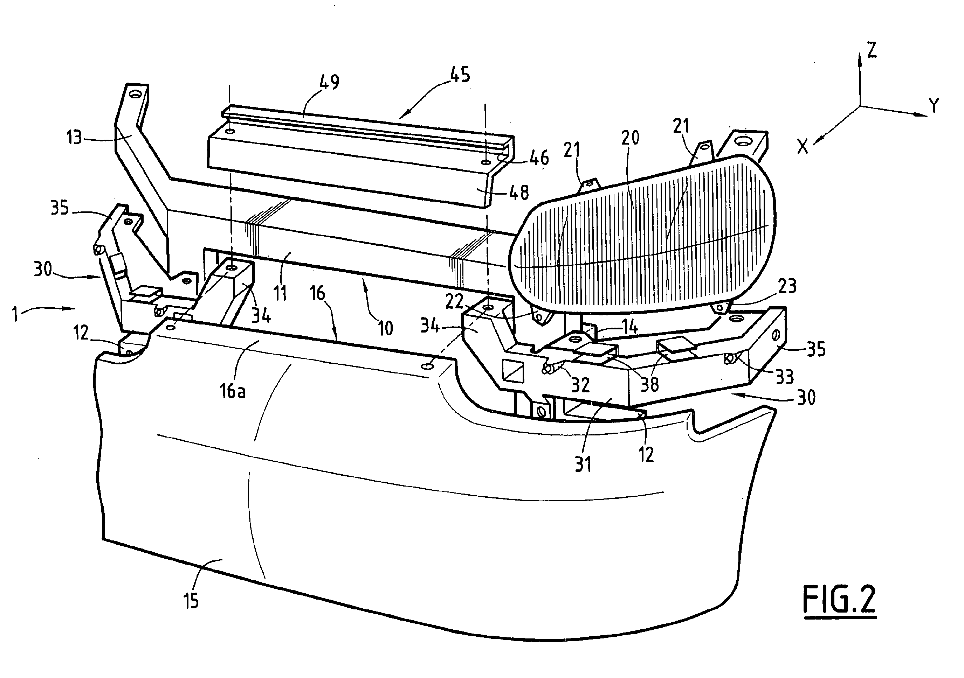

Sur les Figs. 1 et 2, on a représenté schématiquement une partie avant d'un véhicule automobile comprenant un ensemble de bloc-avant 1 représentée partiellement, une extrémité avant 2a d'une aile de carrosserie 2 et une extrémité avant 3 d'un capot.

Les Figs. 1 à 4 ont été orientées selon trois axes X, Y et Z qui correspondent à l'orientation usuelle d'un véhicule automobile, à savoir respectivement l'axe longitudinal X orienté dans la direction de marche avant, l'axe transversal Y orienté de droite à gauche, du point de vue du conducteur, et l'axe vertical Z orienté de bas en haut.

Tous les termes utilisés dans la suite de la description, pouvant indiquer un sens ou un positionnement, doivent être compris en référence à ce système d'axes.

La partie avant du véhicule représentée sur les Figs. 1 et 2 est symétrique ou quasi symétrique par rapport à un plan médian vertical du véhicule, si bien que, dans un but de clarté, la description qui suit sera faite pour un côté de cette partie avant, l'autre côté étant identique.

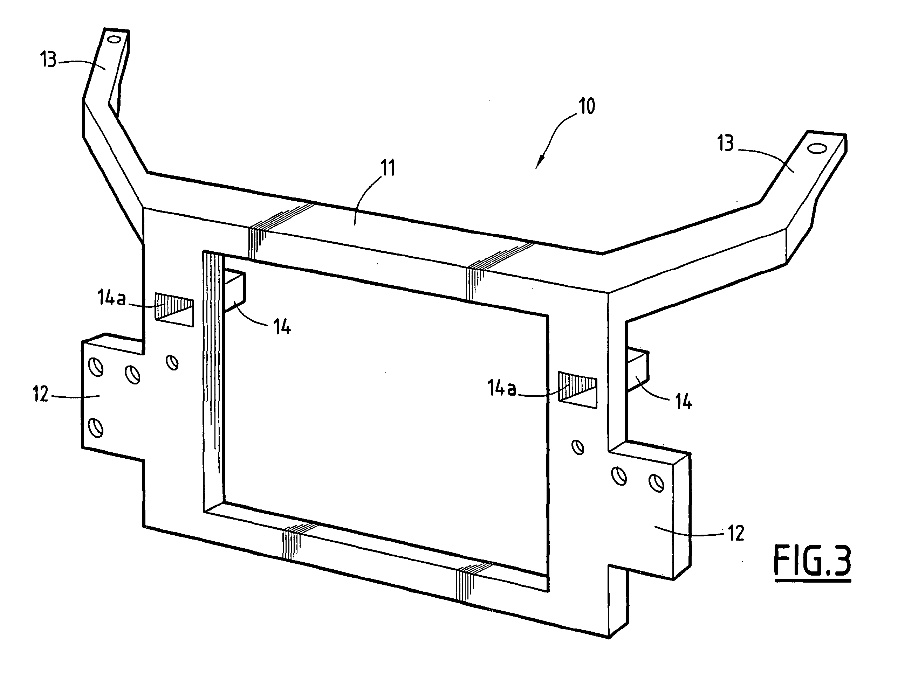

L'ensemble de bloc-avant 1 du véhicule est formée par une structure essentiellement rigide constituée par une face avant désignée par la référence générale 10 et qui présente une partie centrale 11 ayant la forme générale d'un cadre et, de chaque côté, une partie latérale 12, ainsi que montrée à la Fig. 3.

L'ensemble de bloc-avant 1 comporte aussi une peau de pare-chocs 15, réalisée par exemple d'une pièce de matériau plastique, disposée sur toute la largeur de la face avant 10, comme montré à la Fig. 1, en dépassant latéralement des parties latérales 12 de la face avant 10, et en s'appliquant sur un bord de l'extrémité avant 2a de l'aile 2 en coïncidence avec celui-ci.

L'ensemble de bloc-avant 1 comporte, de plus, de chaque côté latéral, un bloc optique 20 monté sur la face avant 10 dans des formes complémentaires ménagées dans l'aile 2, le capot 3 et la peau de pare-chocs 15, au-dessous d'un prolongement supérieur 13 de la face avant 10 et au-dessus d'un bord supérieur 16 de la peau de pare-chocs 15, ainsi que représenté sur les Figs. 1 et 2.

Le bloc optique 20 est fixé sur le prolongement latéral 13 par exemple au moyen de deux pattes 21.

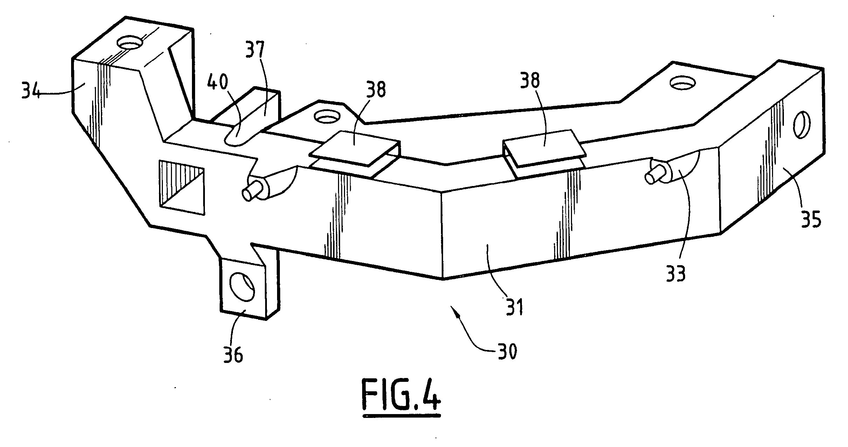

L'ensemble de bloc-avant 1 comporte également, de chaque côté latéral, une poutre flexible et galbée désignée dans son ensemble par la référence 30 et qui est représentée à plus grande échelle à la Fig. 4. Chaque poutre flexible 30 s'étend essentiellement latéralement dans la direction de la peau de pare-chocs 15 et comporte une partie centrale 31 dont la face avant est pourvue d'un premier pion 32 destiné à coopérer avec une première patte inférieure 22 du bloc optique 20 pour l'indexage de ce bloc optique 20 selon les axes X et Z et d'un second pion 33 destiné à coopérer avec une seconde patte inférieure 23 du bloc optique 20 pour l'indexage selon les axes XYZ de ce bloc optique 20.

La poutre flexible 30 comporte une première extrémité 34 reliée à la partie centrale 11 de la face avant.

Ainsi que montré à la Fig. 2, les deux premières extrémités 34 des deux poutres flexibles 30 sont reliées entres elles par un renfort horizontal 45 sur lequel est en appui une zone centrale 16a du bord supérieur 16 de la peau de pare-chocs 15. Ce renfort 45 est fixé, par tout moyen approprié, comme par exemple des organes de vissage, sur chaque première extrémité 34 des poutres flexibles 30.

La zone centrale 16a du bord supérieur de la peau de pare-chocs 15 est soit en appui sur le renfort 45 sans être fixée sur les premières extrémités 34 des poutres flexibles 30, soit en appui sur le renfort 45 et en même temps fixée sur ces premières extrémités 34 par les mêmes organes que ceux fixant le renfort 45 sur lesdites premières extrémités 34.

Le renfort 45 comporte des moyens de positionnement de la zone centrale 16a du bord supérieur 16 de la peau de pare-chocs 15 et qui sont formés par au moins une gouttière 46 s'étendant transversalement suivant la direction générale de ce renfort 45. L'ouverture de la gouttière 46 est dirigée vers l'avant du véhicule et est destinée à coopérer avec la zone centrale 16a du bord supérieur 16 et forme donc un encastrement pour cette partie centrale 16a. De préférence, la gouttière 46 s'étend sur toute la longueur du renfort 45.

Dans l'exemple de réalisation représenté à la Fig. 2, le renfort 45 est formé par un profilé en forme de "S" comportant une âme centrale 47 destinée à être appliquée sur les premières extrémités 34 des poutres flexibles 30. Le profilé formant le renfort 45 comporte également un rebord avant 48 rabattu vers le bas et destiné à venir s'appliquer sur la face avant des poutres flexibles 30 et un rebord arrière 49 rabattu vers le haut formant la gouttière 46.

La première extrémité 34 de chaque poutre flexible 30 est réglable selon un premier axe Z et selon un deuxième axe Y sur la partie centrale 11 de la face avant 10 pour un ajustement de chaque bloc optique 20 par rapport à la peau de pare-chocs 15.

A cet effet, le réglage selon ces deux axes est obtenu par des moyens d'indexage comprenant un manchon creux 14, qui, dans l'exemple de réalisation représenté à la Fig. 3, est solidaire de la partie centrale 11 de la face avant 10 et s'étend perpendiculairement à cette face avant 10 en faisant saillie de cette dernière vers l'arrière suivant son axe longitudinal orienté sensiblement suivant l'axe longitudinal X du véhicule. Ce manchon 14 comporte un trou 14a allongé suivant la direction X de l'axe du manchon 14.

Par exemple, le trou 14a présente une section rectangulaire dont les plus grands côtés sont horizontaux. Le trou 14a peut présenter d'autres formes, comme par exemple une forme oblongue.

Par ailleurs, les moyens d'indexage comprennent un doigt 37 prévu sur la poutre 30 et s'étendant perpendiculairement à cette poutre, vers l'arrière du véhicule automobile, suivant son axe longitudinal orienté sensiblement suivant l'axe longitudinal X de ce véhicule. Le doigt 37 est susceptible de coulissement axial dans l'orifice 14a du manchon creux 14.

Dans l'exemple de réalisation représenté à la Fig. 4, le doigt 37 présente une section rectangulaire dont la hauteur est sensiblement égale à la hauteur du trou 14a du manchon 14 et dont la largeur est inférieure à la largeur de ce trou 14a, de façon à permettre au doigt 37 et par conséquent à la poutre flexible 31 correspondante de pouvoir se déplacer selon l'axe transversal Y, tout en étant bloquée selon l'axe Z.

Chaque manchon 14 comprend aussi des moyens, non représentés, de blocage du doigt 37 correspondant selon l'axe X qui permet de solidariser, de façon définitive, avec une possibilité de démontage, le doigt 37 et le manchon 14. Ces moyens de blocage sont constitués par tout dispositif approprié de type classique, comme par exemple une paire vis/écrou ou une goupille.

De plus, chaque poutre flexible 30 comporte des moyens d'indexage selon les axes X et Z de la peau de pare-chocs 15. Ces moyens d'indexage représentés notamment à la Fig. 4, comprennent au moins une portion en creux 38 ménagée sur la partie supérieure de la partie centrale 31 de la poutre 30. Dans l'exemple de réalisation représenté sur cette figure, ladite portion en creux est formée d'au moins une gouttière 38 et par exemple de deux gouttières 38, qui s'étendent transversalement suivant la direction générale de la poutre 30.

Ces moyens d'indexage comprennent au moins une portion en saillie complémentaire ménagée à la partie supérieure de la peau de pare-chocs et qui, dans l'exemple de réalisation montré sur les Figs. 1 et 2, est constituée par le bord supérieur 16 de la peau de pare-chocs 15, de façon à réaliser un accrochage de cette peau de pare-chocs 15 sur chaque poutre 30, avec une possibilité de mouvement relatif d'ajustement suivant la direction générale de cette poutre 30, c'est à dire selon l'axe Y.

Chaque poutre flexible 30 comporte éventuellement une zone de flexion 40 disposée entre la première extrémité 34 et la portion centrale 31 et plus particulièrement entre la première extrémité 34 de fixation de la peau de pare-chocs 15 et la portion centrale 31 sur laquelle est monté le bloc-avant 20 correspondant. Cette zone de flexion est formée par exemple par une encoche 40 sensiblement verticale. Cette encoche 40 est notamment utile quand la partie d'extrémité 2a de l'aile 2 fixée sur la seconde extrémité 35 de la poutre 30 correspondante, est rigide.

La configuration des différents éléments composant ensemble de bloc-avant conforme à l'invention, n'impose pas un ordre de montage entre eux particulier, et par exemple les blocs optiques peuvent être montés sur les poutres flexibles avant le montage de celles-ci sur la face avant ou ils peuvent être montés après.

Grâce au renfort entre les premières extrémités des deux poutres flexibles, la rigidité de la peau de pare-chocs est accrue et la cohésion de l'ensemble des éléments composant l'ensemble de bloc-avant selon l'invention, est améliorée.

L'ensemble de bloc-avant selon l'invention permet par conséquent d'obtenir une qualité esthétique optimale de la partie avant du véhicule, constante dans le temps et ce sans opération de reprise et d'ajustement supplémentaire, postérieure à l'assemblage du véhicule.

## Revendications

1. Ensemble de bloc-avant de véhicule automobile, du type comprenant :
- une face avant (10) rigide présentant une partie centrale (11) et deux parties latérales (12, 13),
- une peau de pare-chocs (15, 16),
- deux poutres flexibles (30) s'étendant latéralement, dont une première extrémité (34) est reliée à la partie centrale (11) de la face avant (10) et dont une seconde extrémité (35) est reliée à une partie avant (2a) d'une aile de carrosserie (2), et,
- deux blocs optiques (20) dont chacun est fixé rigidement à une poutre flexible (30) respective,
**caractérisée en ce que** les deux premières extrémités (34) des poutres flexibles (30) sont reliées entres elles par un renfort (45) horizontal sur lequel est en appui une zone centrale (16a) de la peau de pare-chocs (15, 16).

2. Ensemble de bloc-avant selon la revendication 1, **caractérisée en ce que** la peau de pare-chocs (15, 16) est fixée sur la première extrémité (34) de chaque poutre flexible (30).

3. Ensemble de bloc-avant selon la revendication 1 ou 2,
**caractérisée en ce que** le renfort (45) comporte des moyens (46) de positionnement de la zone centrale (16a) de la peau de pare-chocs (15, 16).

4. Ensemble de bloc-avant selon la revendication 3, **caractérisée en ce que** les moyens de positionnement sont formés par au moins une gouttière (46) s'étendant transversalement suivant la direction générale du renfort (45) et destinée à coopérer avec ladite zone centrale (16a) de la peau de pare-chocs (15, 16).

5. Ensemble de bloc-avant selon l'une quelconque des revendications 1 à 4, **caractérisée en ce que** le renfort (45) est formé par un profilé métallique ou en matière plastique.

## Claims

1. Front end assembly of a motor vehicle, of the type comprising:
- a rigid front face (10) having a central part (11) and two lateral parts (12, 13),
- a bumper skin (15, 16),
- two flexible brackets (30) extending laterally, the first (34) of the ends of which is connected to the central part (11) of the front face (10) and the second (35) of the ends of which is connected to a front part (2a) of a body wing (2), and
- two lens assemblies (20), each of which is rigidly fixed to a respective flexible bracket (30),
**characterised in that** the two first ends (34) of the flexible brackets (30) are connected to one another by a horizontal reinforcement (45) against which there rests a central zone (16a) of the bumper skin (15, 16).

2. Front end assembly according to claim 1, **characterised in that** the bumper skin (15, 16) is fixed to the first end (34) of each flexible bracket (30).

3. Front end assembly according to claim 1 or 2, **characterised in that** the reinforcement (45) includes means (46) for positioning the central zone (16a) of the bumper skin (15, 16).

4. Front end assembly according to claim 3, **characterised in that** the positioning means are formed by at least one trough (46) which extends transversely in the same general direction as the reinforcement (45) and which is arranged to co-operate with said central zone (16a) of the bumper skin (15, 16).

5. Front end assembly according to any one of claims 1 to 4, **characterised in that** the reinforcement (45) is formed by a profiled member of metal or plastics material.

## Patentansprüche

1. Kräftfahrzeug-Frontblockeinheit, umfassend:
- eine starre Frontseite (10), die einen Mittelteil (11) und zwei Seitenteile (12, 13) aufweist,
- eine Stoßstangenhaut (15, 16),
- zwei sich seitlich erstreckende flexible Träger (30), von denen ein erstes Ende (34) mit dem Mittelteil (11) der Frontseite (10) verbunden ist und ein zweites Ende (35) mit einem vorderen teil (2a) eines Karosserieflügels (2) verbunden ist, und
- zwei Optikblöcke (20); deren jeder jeweils an einem flexiblen Träger (30) starr befestigt ist,
**dadurch gekennzeichnet, dass** die beiden ersten Enden (34) der flexiblen Träger (30) miteinander durch eine horizontale Verstärkung (45) verbunden sind, auf der eine mittlere Zone (16a) der, Stoßstangenhaut (15, 16) aufliegt.

2. Frontblocke-inheit nach Anspruch 1, **dadurch gekennzeichnet, dass** die Stoßstangenhaut (15, 16) an dem ersten Ende (34) jedes flexiblen Trägers (30) befestigt ist.

3. Frontblockeinheit nach Anspruch 1 oder 2, **dadurch gekennzeichnet, dass** die Verstärkung (45) Mittel (46) zur Positionierung der mittleren Zone (16a) der Stoßstangenhaut (15, 16) umfasst.

4. Frontblockeinheit nach Anspruch 3, **dadurch gekennzeichnet, dass** die Positionierungsmittel von mindestens einer Rinne (46) gebildet sind, die sich in der Hauptrichtung der Verstärkung (45) in Querrichtung erstreckt und dazu bestimmt ist, mit er mittleren Zone (16a) der Stoßstangenhaut (15,16) zusammenzuwirken.

5. Frontblockeinheit nach einem der Ansprüche 1 bis 4, **dadurch gekennzeichnet, dass** die Verstärkung (45) von einem Profilteil aus Metall oder Kunststoff gebildet ist.
